# FASCICULE DE BREVET EUROPEEN

(11) **EP 3 353 256 B1**
(45) Date de publication et mention de la délivrance du brevet: **26.07.2023**
(21) Numéro de dépôt: 16781839.2
(22) Date de dépôt: 20.09.2016
(51) Int. Cl.: C09J 105/00, C09J 105/06, C09J 189/00, C09J 189/06, C09J 199/00, C08L 97/02

(54) **COMPOSITION ADHESIVE COMPRENANT UN ESTER DE SILICATE**
HAFTZUSAMMENSETZUNG MIT EINEM SILIKATESTER
ADHESIVE COMPOSITION COMPRISING A SILICATE ESTER

(30) Priorité: 21.09.2015 FR 1558855
(43) Date de publication de la demande: 01.08.2018
(73) Titulaire: Université Amiens Picardie Jules Verne, 80090 Amiens (FR)
(72) Inventeur: QUENEUDEC T'KINT, Michèle, 35700 Rennes (FR); MONTRELAY, Nicolas, 80000 Amiens (FR); HOUESSOU, Koffi Justin, 93100 Montreuil (FR)
(74) Mandataire: Plasseraud IP
(86) Numéro de dépôt international: PCT/FR2016/052375
(87) Numéro de publication internationale: WO 2017/051106

(56) Documents cités:
- WO-A1-2005/063308
- WO-A2-95/14448
- CN-A- 104 349 687
- FR-A1- 2 942 234
- US-A- 4 095 990
- CHENG E ET AL: "Adhesive properties of modified soybean flour in wheat straw particleboard", COMPOSITES PART A: APPLIED SCIENCE AND MANUFACTURING, ELSEVIER SCIENCE PUBLISHERS B.V., AMSTERDAM, NL, vol. 35, no. 3, 1 mars 2004 (2004-03-01), pages 297-302, XP004489086, ISSN: 1359-835X, DOI: 10.1016/J.COMPOSITESA.2003.09.008

## Description

L'invention concerne une composition adhésive comprenant un ester de silicate, un procédé de préparation d'une telle composition adhésive ainsi que l'ester de silicate en tant que tel.

La composition adhésive de l'invention trouvera une application particulière, mais non limitative, dans le domaine des colles à bois, notamment pour des panneaux de matière végétale, notamment lignocellulosiques.

Par « panneaux de matière végétale » au sens de la présente invention, on entend les panneaux dérivés de matière lignocellulosique, telle que par exemple le bois, le lin ou le chanvre. Il peut par exemple s'agir de panneaux de particules (aussi appelés « aggloméré »), de panneaux de fibres, de panneaux de lamelles (OSB et WAFER BOARD) ou de panneaux contreplaqués.

Traditionnellement, les colles utilisées pour la fabrication de panneaux de matière végétale sont des résines à base de formaldéhyde comme, par exemple, les résines urée-formol (UF), phénol-formol, cétone-formol, mélamine-formol (MF), mélamine-urée-formol (MUF), nitroparaffine-formol, tannins-formol, ou à base de produits libérant du formaldéhyde comme l'hexaméthylène tétramine.

Du fait de leur teneur souvent élevée en formaldéhyde libre, l'utilisation de ces résines pose des problèmes considérables, notamment de santé publique. Irritantes pour la peau et les muqueuses, même pour un taux dans l'air faible (1 ou 2 parties par million, ou ppm), d'odeur désagréable dès 0,2 ppm, les vapeurs de formaldéhyde sont réputées atteindre les fonctions respiratoires (« asthme au formol »).

Les populations les plus touchées par ces problèmes sont le personnel attaché à la fabrication des panneaux de matière végétale et les bébés et jeunes enfants qui sont exposés à ces vapeurs du fait de l'utilisation de ce type de panneaux dans l'ameublement et l'aménagement intérieur.

Il existe donc un réel besoin de nouvelles compositions adhésives exemptes de formaldéhyde qui sont appropriées à la fabrication de panneaux de matière végétale.

La demande de brevet WO 2010/094856 dont les présents demandeurs sont également les titulaires, décrit un procédé de fabrication d'un agro matériau, notamment d'un agro liant ou agro composite, dans lequel on mélange un composé pectique issu du végétal, un gel, par exemple de la gélatine, et un solvant et on soumet le mélange à un traitement thermique. Cet agro matériau peut être utilisé dans le domaine de la construction, du transport, de l'emballage, de l'équipement électronique ou des technologies de télécommunication. Il a toutefois été constaté que ses performances sont insatisfaisantes pour la fabrication de panneaux de matière végétale, notamment de panneaux de fibres.

Il existe donc toujours un besoin de nouvelles compositions adhésives écologiques et performantes, permettant de pallier tout ou partie des inconvénients des colles de l'art antérieur identifiés ci-dessus.

Un but de l'invention est donc de fournir de nouvelles compositions adhésives, exemptes de formaldéhyde présentant de bonnes performances qui peuvent être facilement fabriquées et mises en oeuvre.

Un objet de la présente invention est de proposer des compositions adhésives permettant d'atteindre des performances des panneaux identiques ou supérieures à celles qui sont obtenues avec des colles UF, MUF ou isocyanates.

Un objet de la présente invention est de proposer des compositions adhésives permettant des cadences de fabrication identiques à celles qui existent actuellement dans les fabrications en continu.

Un objet de la présente invention est de proposer des compositions adhésives ne contenant ni solvant organique ni autres composants toxiques.

Il est ainsi du mérite des inventeurs d'avoir mis au point une composition adhésive aqueuse comprenant comme composante adhésive principale un ester de silicate obtenu par réaction entre une protéine, un polysaccharide et un métasilicate alcalin, la protéine comprenant un ou plusieurs de chacun des acides aminés suivants : sérine, thréonine et lysine et le polysaccharide comportant des groupements carboxyliques (-COOH) et/ou des groupements sulfoniques (-SO₃H).

L'un des principaux avantages de la composition adhésive selon l'invention est qu'elle est exempte de formaldéhyde. Cette composition ne pose donc pas les problèmes de santé connus des résines synthétiques à base de formaldéhyde habituellement utilisées pour la fabrication des panneaux de matières végétales, tels que les panneaux de particules.

La protéine peut être une protéine végétale ou animale. Dans un mode de réalisation préféré, la protéine est de la gélatine.

Le polysaccharide est choisi parmi les polysaccharides comportant des groupements carboxyliques (-COOH) et/ou des groupements sulfoniques (-SO₃H). A titre d'exemple on peut citer les galacturonates (tels que les pectines), les alginates, la xanthane, la gellane, les ulvanes, les carraghénanes (iota, kappa, lambda), les fucanes et leurs mélanges. De préférence, le polysaccharide est choisi parmi les pectines, les alginates, la xanthane, la gellane, les ulvanes, les carraghénanes (iota, kappa, lambda), les fucanes et leurs mélanges, plus préférentiellement parmi les pectines, les ulvanes et les carraghénanes (iota, kappa, lambda) et leurs mélanges, plus préférentiellement encore parmi les pectines, les ulvanes, la carraghénane iota et leurs mélanges. Les carraghénanes, les fucanes, les alginates et les ulvanes sont des polysaccharides issus des algues rouges (carraghénanes), brunes (alginates, ulvanes) et vertes (fucanes) respectivement. Ces polysaccharides peuvent être utilisés sous forme pure ou sous forme d'un broyat ou poudre d'algues. Ainsi dans une variante de l'invention, le polysaccharide est choisi parmi les broyats ou poudres d'algues, notamment parmi les broyats ou poudres d'algues rouges, les broyats ou poudres d'algues brunes, les broyats ou poudres d'algues vertes et leurs mélanges.

Dans un mode de réalisation, le polysaccharide est un polysaccharide comportant des groupements carboxyliques (-COOH). L'ester de silicate selon l'invention de ce mode de réalisation est donc un polyamide ester de silicate. Le polysaccharide comportant des groupements carboxyliques peut notamment être choisi parmi les galacturonates (tels que les pectines), les alginates, la xanthane, la gellane, les ulvanes et leurs mélanges. De préférence le polysaccharide comportant des groupements carboxyliques est choisi parmi les galacturonates (tels que les pectines), les alginates, la xanthane, gellane et leurs mélanges, de préférence encore il est choisi parmi les pectines, les alginates, la xanthane, la gellane, les ulvanes et leurs mélanges, plus préférentiellement parmi les pectines, les ulvanes et leurs mélanges. Les alginates et les ulvanes étant des polysaccharides issus des algues brunes, ces polysaccharides peuvent être utilisés sous forme pure ou sous forme d'un broyat ou poudre d'algues. Ainsi dans une variante de l'invention, le polysaccharide comportant des groupements carboxyliques est choisi parmi les broyats ou poudres d'algues brunes. Dans une autre variante de l'invention, le polysaccharide comportant des groupements carboxyliques est une pectine.

Dans un autre mode de réalisation, le polysaccharide est un polysaccharide comportant des groupements sulfoniques (-SO₃H). L'ester de silicate selon l'invention de ce mode de réalisation est donc un ester sulfonique de silicate. Le polysaccharide comportant des groupements sulfoniques peut notamment être choisi parmi les ulvanes, les carraghénanes (iota, kappa, lambda), les fucanes et leurs mélanges, de préférence les carraghénanes (iota, kappa, lambda), les fucanes et leurs mélanges, plus préférentiellement encore parmi les carraghénanes (iota, kappa, lambda), notamment le carraghénane iota. Les ulvanes et les fucanes étant des polysaccharides issus des algues brunes (ulvanes) et vertes (fucanes) respectivement, ces polysaccharides peuvent être utilisés sous forme pure ou sous forme d'un broyat ou poudre d'algues. Ainsi, dans une variante de l'invention, le polysaccharide comportant des groupements carboxyliques est choisi parmi les broyats ou poudres d'algues brunes.

Le polysaccharide peut également comporter des groupements carboxyliques (-COOH) et des groupements sulfoniques (-SO₃H). Un exemple d'un tel polysaccharide sont les ulvanes. Comme précisé précédemment, les ulvanes sont des polysaccharides issus d'algues vertes. Ils peuvent être utilisés sous forme pure ou sous forme d'un broyat ou d'une poudre d'algues vertes. Dans un mode de réalisation avantageux, on utilisera un broyat ou une poudre d'algues vertes.

Le métasilicate alcalin peut être choisi notamment parmi les métasilicates de sodium et de potassium. Le métasilicate préféré est le métasilicate de sodium.

La composition adhésive selon l'invention peut également comprendre divers adjuvants. Ces adjuvants peuvent tout d'abord être distingués en adjuvants pulvérulents et adjuvants liquides.

Les adjuvants pulvérulents sont ceux-habituellement utilisés dans l'industrie. Ces adjuvants comprennent de façon non limitative les agents fluidifiants comme des protéines et notamment l'hémoglobine, les agents hydrofuges, la mélamine et l'acide sébacique. Il est également possible d'ajouter des pigments ou charges d'usage courant dans l'industrie. Ces pigments ou charges sont employés comme agents de « remplissage » pour préserver ou conforter, à faible coût, les propriétés essentielles à l'application. Sont utilisés à ces fins, par exemple, des kaolins, des carbonates de calcium, du talc, de l'oxyde de titane, des sulfates de calcium ou de baryum. Ces adjuvants se révèlent utiles pour, notamment, le bouchage des pores et, telle kaolin par exemple, pour éviter le cloquage (okoumé). Il est encore d'usage d'ajouter des tannins, de préférence, des tannins condensés comme, par exemple, des tannins d'écorce de pin, de noix de pécan, de mimosa et / ou de quebracho, notamment modifiés.

Parmi les adjuvants liquides pouvant être utilisés, on peut citer les tensioactifs, le glyoxal, le triacétate de glycérol et la paraffine, notamment sous forme d'émulsions.

La composition adhésive selon l'invention est une composition aqueuse. De préférence, cette composition adhésive est exempte de tout solvant organique. Dans ce mode de réalisation, la composition adhésive de l'invention contient de l'eau comme unique solvant.

La réaction entre une protéine et un polysaccharide tels que définis ci-dessus et un métasilicate alcalin, donne lieu à des réactions de couplage entre les groupements fonctionnels des différents produits de départ. Ces réactions se font de façon simultanée.

Les inventeurs ont mis en évidence par spectroscopie infrarouge à transformée de Fourier (IRTF) que la première réaction qui a lieu est une réaction d'estérification entre le métasilicate alcalin et les groupements hydroxyles des alcools primaires des chaînes latérales des sérines de la protéine. Les groupements hydroxyles peuvent se trouver sur la même chaîne de protéine ou sur deux, trois ou quatre chaînes différentes. On obtient donc une réticulation de la protéine via des groupements silicates.

La seconde réaction ayant lieu dépend du polysaccharide mis en oeuvre. Dans le cas d'un polysaccharide comportant des groupements carboxyliques, il s'agit d'une réaction de condensation entre les fonctions carboxyliques du polysaccharide et les fonctions amines des chaînes latérales de la lysine de la protéine. On obtient donc une réticulation directe entre la protéine et le polysaccharide via des groupements amides. Dans les cas d'un polysaccharide comportant des groupements sulfoniques, il s'agit d'une réaction de sulfonation entres les fonctions sulfoniques du polysaccharide et les fonctions hydroxyles des alcools secondaires des chaînes latérales des thréonines de la protéine. On obtient donc une réticulation directe entre la protéine et le polysaccharide via des groupements sulfonates. Dans le cas d'un polysaccharide comportant à la fois des groupements carboxyliques et des groupements sulfoniques, on obtient une réticulation entre le polysaccharide et la protéine via des groupements amides et des groupements sulfonates.

L'invention concerne donc également un ester de silicate obtenu par réaction entre une protéine, un polysaccharide et un métasilicate alcalin, la protéine comprenant un ou plusieurs de chacun des acides aminés suivants : sérine, thréonine et lysine et le polysaccharide comportant des groupements carboxyliques (-COOH) et/ou des groupements sulfoniques (-SO₃H). Avantageusement, cet ester de silicate est la seule composante adhésive de la composition adhésive de l'invention.

Comme expliqué ci-dessus, cet ester de silicate est caractérisé par une réticulation des chaînes peptidiques de la protéine entre elles via des groupements silicates et une réticulation des chaînes peptidiques de la protéine et le polysaccharide. La réticulation entre les chaînes peptidiques et le polysaccharide se faisant soit via des groupements amides dans le cas de polysaccharides comportant des groupements carboxyliques, soit via des groupements sulfonates dans le cas de polysaccharides comportant des groupements sulfoniques, soit via les deux dans le cas de polysaccharides comportant des groupements carboxyliques et des groupements sulfoniques.

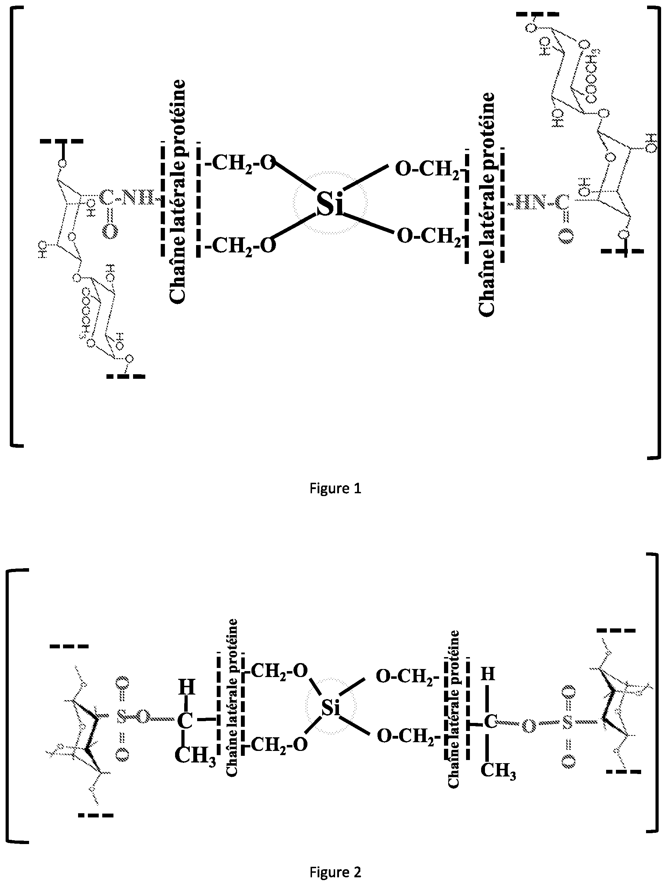

A titre d'exemple d'un polyamide ester de silicate obtenu par la réaction entre une protéine, un polysaccharide comportant des groupements carboxyliques et du métasilicate alcalin, la figure 1 représente de façon schématique la structure d'une unité de répétition d'un polyamide ester de silicate obtenu par la réaction entre une protéine, de la pectine et du métasilicate alcalin, notamment du métasilicate de sodium.

A titre d'exemple d'un ester sulfonique de silicate obtenu par la réaction entre une protéine, un polysaccharide comportant des groupements sulfoniques et du métasilicate alcalin, la figure 2 représente de façon schématique la structure d'une unité de répétition d'un ester sulfonique de silicate obtenu par la réaction entre une protéine, de la carraghénane et du métasilicate alcalin, notamment du métasilicate de sodium.

L'invention concerne également un procédé de préparation d'une composition adhésive comprenant un ester de silicate comme composante adhésive principale telle que décrite ci-dessus comprenant au moins les étapes suivantes :
1. préparer un mélange à sec d'une protéine, d'au moins un polysaccharide, de métasilicate alcalin et éventuellement d'un ou plusieurs adjuvants, la protéine comprenant un ou plusieurs de chacun des acides aminés suivants : sérine, thréonine et lysine, le polysaccharide comportant des groupements carboxyliques (-COOH) et/ou des groupements sulfoniques (-SO₃H) et tous les constituants du mélange étant sous forme pulvérulente,
2. ajouter un solvant aqueux au mélange préparé à l'étape précédente et mélanger,
3. soumettre le mélange obtenu à l'étape précédente à un traitement thermique de façon à obtenir un ester de silicate.

Les produits de départ et adjuvants pulvérulents mis en oeuvre dans ce procédé sont ceux définis ci-dessus par rapport à la composition adhésive de l'invention.

La teneur en protéine du mélange à sec est avantageusement de 50 à 70 %, de préférence de 55 à 68 %, plus préférentiellement encore de 58 à 66%, ces pourcentages étant exprimés en poids sec par rapport au poids sec de protéine, polysaccharide et métasilicate alcalin.

La teneur en polysaccharide du mélange à sec est avantageusement de 5 à 20 %, de préférence de 7 à 9 %, plus préférentiellement encore de 9 à 18 %, ces pourcentages étant exprimés en poids sec par rapport au poids sec de protéine, polysaccharide et métasilicate alcalin.

La teneur en métasilicate alcalin du mélange à sec est avantageusement de 15 à 30 %, de préférence de 20 à 27%, plus préférentiellement encore de 22 à 25 %, ces pourcentages étant exprimés en poids sec par rapport au poids sec de protéine, polysaccharide et métasilicate alcalin.

Le solvant aqueux mis en oeuvre est de préférence de l'eau. Dans une variante, on ajoute également un ou plusieurs additifs au moment de l'ajout du solvant aqueux. Cet ajout peut se faire soit simultanément soit consécutivement à l'ajout de l'eau. Lorsqu'il s'agit d'un ajout simultané, le ou les additifs peuvent être mélangés au préalable avec le solvant aqueux ou ajoutés séparément. Des exemples d'additifs pouvant être utilisés comprennent les tensioactifs, le glyoxal, le triacétate de glycérol et la paraffine, notamment sous forme d'émulsions.

Tous les types de traitements thermiques connus de l'homme du métier conviennent à la réalisation de l'étape de traitement thermique. Le traitement thermique préféré est un traitement thermique par micro-ondes. L'homme du métier saura ajuster le temps de traitement et la puissance des micro-ondes, notamment en fonction de la quantité du mélange à traiter.

L'étape de traitement thermique est avantageusement effectuée à une température inférieure à la température d'ébullition. De préférence, la température est de 37°C à 93°C, préférentiellement de 53 à 75°C, plus préférentiellement encore de 60 à 70°C.

L'un des avantages du procédé de préparation d'une composition adhésive de l'invention est qu'il n'est pas obligatoire que toutes les étapes soient réalisées dans un même endroit. Il est par exemple possible de préparer le mélange à sec d'une protéine, d'au moins un polysaccharide, de métasilicate alcalin et éventuellement d'un ou plusieurs adjuvants dans un premier endroit et de le transporter dans un deuxième, autre endroit où il est additionné de la solution aqueuse, mélangé et le mélange obtenu soumis au traitement thermique.

Un objet de l'invention est donc également un prémix d'une composition adhésive telle que décrite ci-dessus, constitué d'un mélange à sec d'une protéine, d'au moins un polysaccharide, de métasilicate alcalin et éventuellement d'un ou plusieurs adjuvants. Les constituants du mélange à sec ainsi que les quantités utilisées sont ceux définis ci-dessus par rapport au procédé de préparation de la composition adhésive de l'invention.

Un autre objet de l'invention est l'utilisation de la composition adhésive de l'invention pour la fabrication de panneaux de matières végétales. Ainsi, l'invention concerne également un procédé de fabrication de panneaux de matières végétales, notamment lignocellulosiques, comprenant une étape de traitement desdites matières végétales par une composition adhésive selon l'invention notamment le mélange desdites matières végétales avec une composition adhésive selon l'invention, et des étapes de mise en forme et de pressage à chaud des matières végétales ainsi traitées.

Les panneaux de matières végétales, notamment panneaux de particules, obtenus avec la composition adhésive selon l'invention, présentent des performances, notamment mécaniques tout à fait comparables aux panneaux fabriqués avec des résines synthétiques.

Les inventeurs ont également démontré que la composition adhésive selon l'invention peut être mise en oeuvre dans des conditions de fabrication proches voire identiques aux conditions utilisées avec des résines synthétiques, par exemple du type urée-formol (UF).

La présente invention permet de plus la fabrication de panneaux de matières végétales exemptes de formol et de solvants organiques ce qui présente un avantage considérable en termes de santé publique, notamment pour les ouvriers et les utilisateurs finaux. De ce fait, l'utilisation de ces panneaux dans l'aménagement intérieur et l'ameublement est particulièrement avantageuse.

L'invention a également pour objet l'utilisation de la composition adhésive de l'invention comme colle d'assemblage de pièces en bois, polystyrène expansé ou mousse de polyuréthane.

### FIGURES

La figure 1 est une représentation schématique de la structure d'une unité de répétition d'un polyamide ester de silicate obtenu par la réaction entre une protéine, de la pectine et du métasilicate alcalin, notamment du métasilicate de sodium.
La figure 2 est une représentation schématique de la structure d'une unité de répétition d'un ester sulfonique de silicate obtenu par la réaction entre une protéine, de la carraghénane et du métasilicate alcalin, notamment du métasilicate de sodium.
La figure 3 montre le spectre infrarouge (IR-TF) d'une composition adhésive selon l'invention à base d'un polyamide ester de silicate.
La figure 4 montre le spectre infrarouge (IR-TF) de la gélatine seule.

L'invention est décrite plus en détail ci-après, à l'aide des exemples suivants qui ne sont nullement limitatifs mais sont donnés à titre d'exemple uniquement.

### EXEMPLES

### EXEMPLE 1 :

6,88 g de gélatine, 1,5 g de pectine, 2,5 g de métasilicate de sodium ont été mélangés à sec. Après homogénéisation du mélange on a ajouté 27 g d'eau et l'ensemble est soumis à un rayonnement microondes dans un four ménager à 750W pendant 30 s. A l'issue de ce traitement et après homogénéisation, une pâte fluide a été obtenue qui a été étudiée en spectroscopie infrarouge selon les modalités suivantes : quelques mg de colle séchée à l'air libre ont été prélevés et posés sur le support ATR (cristal diamant) d'un spectromètre IR à Transformée de Fourier Shimadzu IR Prestige-21. Le spectre a été enregistré par co-addition de 100 scans (nombre de balayages) entre 4000 cm⁻¹ et 650 cm⁻¹ avec une résolution de 4 cm⁻¹.

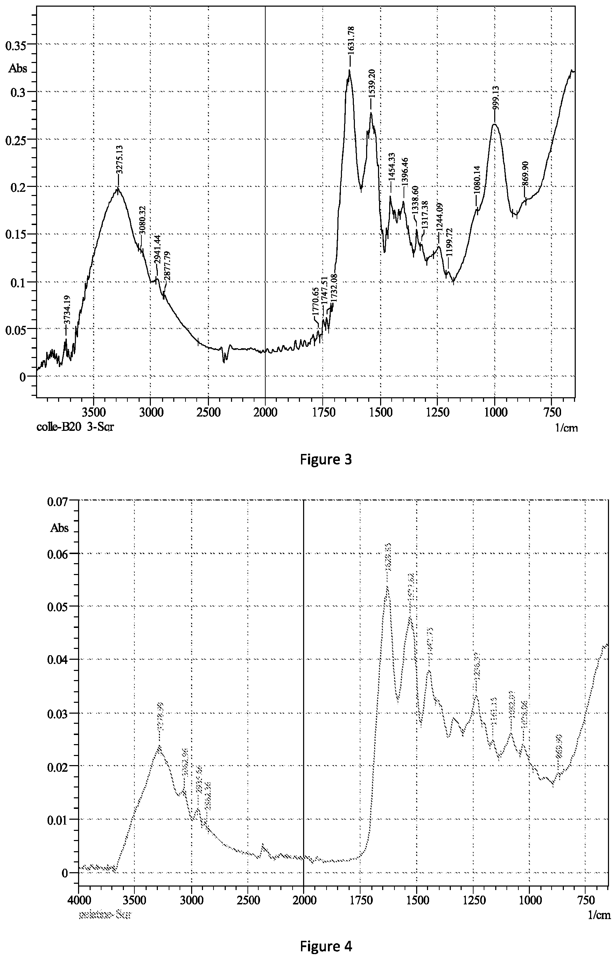

Le spectre IR-TF du produit final est représenté à la figure 4. La comparaison de ce spectre avec celui de la gélatine a montré d'une part, la présence des liaisons Si-O-C condensées caractéristiques des esters de silicates de la forme -(C-O-)4Si issus de la réaction d'estérification entre le métasilicate alcalin et les groupements hydroxyles des sérines des chaînes latérales de la protéine et d'autre part, la présence de liaisons peptidiques provenant de la réaction de condensation entre les fonctions carboxyliques de la pectine et les fonctions amines des lysines des chaînes latérales de la protéine indiquant ainsi que le produit final est bien un polyamide ester de silicate.

### EXEMPLE 2 :

6,88g de gélatine, 1,5g de pectine et 2,5g de métasilicate de sodium ont été mélangés à sec. Le mélange peut être conservé pendant plusieurs mois à l'abri de l'humidité dans un bocal fermé. Au moment de l'utilisation, on a ajouté 27g d'eau et l'ensemble a été soumis à un rayonnement microondes dans un four ménager à 750W pendant 30s. A l'issue de ce traitement et après homogénéisation, une pâte fluide qui possède des pouvoirs adhésifs a été obtenue. Cette pâte a été mélangée avec des copeaux de bois dans des proportions qui varient avec leur granulométrie. Soit 3,90% pour les copeaux de granulométrie inférieure ou égale à 5mm et 5,34% pour les copeaux de granulométrie inférieure ou égale à 1,25mm. Les copeaux additionnés de colle ont été introduits dans un moule de dimensions 10^{∗}10cm en 3 couches. La première de 40,8g correspond à la granulométrie la plus fine. La seconde de 63,32g à la granulométrie la plus élevée. La troisième couche était identique à la première.

L'ensemble a été soumis à une thermocompression sur une presse MIB HYDRO 350kN avec une charge de 200kN pendant 4min, 100kN pendant 40s, 50 kN pendant 20s et une température plateaux de190°C soit un total de 5min.

Après refroidissement, les panneaux ont été découpés en éprouvettes parallélépipédiques de dimensions 10cm (longueur) × 1,58cm (épaisseur) × 1,93cm(largeur). Les essais en flexion effectués suivant la norme NF EN310 Juin 1993 sur une machine Shimadzu AGX-10kNX conduisaient à une contrainte maximum de 13,9±0,6 MPa.

### EXEMPLE 3 :

Toutes conditions restant par ailleurs identiques à celles de l'exemple 1, le mélange solide + eau a été soumis à une activation par microondes durant 27s. On obtient une contrainte maximum en flexion de 14,4±1,1MPa.

### EXEMPLE 4 :

Toutes conditions restant par ailleurs identiques à celles de l'exemple 1, le mélange solide + eau a été soumis à une activation par microondes durant 25s. On obtient une contrainte maximum en flexion de 14,6±0,4MPa.

### EXEMPLE 5 :

Toutes conditions restant par ailleurs identiques à celles de l'exemple 2, la pectine a été remplacée par du carraghénane iota. On obtient une contrainte maximum en flexion de 15,2±1,6 MPa.

### EXEMPLE 6 :

Le mode opératoire restant identique à celui de l'exemple 1, la pectine a été remplacée par des algues vertes broyées. A 27,52 g de gélatine, on a ajouté 6g d'algues vertes et 10g de métasilicate de sodium. Après mélange à sec, on a ajouté 75g d'eau et 1, 4g de glyoxal et on a mélangé à nouveau. L'ensemble a ensuite été soumis à un traitement micro-ondes dans un four ménager à 750W pendant 20s. L'essai en flexion du panneau obtenu conduit à une contrainte maximum de 15,55±0,64 MPa.

### EXEMPLE 7 :

Toutes les conditions opératoires étant par ailleurs identiques à celles de l'exemple 6, la pectine n'a été que partiellement remplacée, soit un ajout de 3g de pectine et 3g d'algues vertes broyées dans le mélange sec. Dans le mélange humide, on a ajouté en plus 1g d'émulsion de paraffine. L'essai en flexion du panneau obtenu conduit à une contrainte maximum de 13,24±0,16 MPa.

### EXEMPLE 8 :

Un mélange sec constitué de 27,52g de gélatine, 6g de pectine et 10g de métasilicate de sodium a été additionné de 75g d'eau et l'ensemble est exposé à un rayonnement microondes dans un four ménager à 750W pendant 30s. Des panneaux 20cm×20cm ont été élaborés suivant le même mode opératoire que dans l'exemple 1. Le temps de thermocompression est 2mn, la température plateaux 195°C et la pression appliquée 200 kN pendant 1mn 25s, 100kN pendant 25s et 50kN pendant 10s. Les éprouvettes de masse volumique 715kg/m3 et d'épaisseur 15,90mm ont été testées en flexion sur une machine Shimadzu AGX-10kNX. Les résultats suivants ont été obtenus :
Module : 2288±74 MPa
Contrainte max : 15,23±0,31 MPa
Déformation à la rupture : 1,22±0,08 %

La traction perpendiculaire testée suivant la norme NF EN 319 Juin 1993 est 0,33±0,04 MPa.

L'arrachement de vis déterminé suivant la norme NF B 51-260 Aout 1992 est 78,75±4,77daN.

Le gonflement évalué suivant la norme NF EN 317 Juin 1993 est 29,1%.

### EXEMPLE 9 :

Le mélange sec de l'exemple 8 a été additionné de 3g d'acide sébacique, 5g d'une émulsion de paraffine à 0,6% et de 75g d'eau. Après exposition au rayonnement microondes dans un four ménager à 750W pendant 30s, on a homogénéisé le mélange qui est ensuite ajouté aux copeaux de bois dans les mêmes conditions que celles de l'exemple 1. L'élaboration des panneaux de masse volumique 624 kg/m³ et d'épaisseur15,52±0,00 est effectuée dans les mêmes conditions que dans l'exemple 8. Les résultats obtenus lors des essais effectués suivant les modes opératoires cités dans l'exemple 8 sont :
Module : 3804±68 MPa
Contrainte max : 19,32±2,71 MPa
Déformation à la rupture : 1,01±0,08%
Traction perpendiculaire : 0,42±0,02 MPa
Gonflement : 27,42±0,74 %

### EXEMPLE 10 :

Toutes les conditions étant identiques par ailleurs à celles de l'exemple 7, le mélange sec est additionné de 3,4g d'un hydrofuge : Polyfox 156A fourni par OMNOVA Solutions. Les résultats obtenus sont :
Module : 2759±56MPa
Contrainte max : 17,13±0,02 MPa
Déformation à la rupture : 1,09±0,01 MPa
Gonflement : 23,02±1,47%

### EXEMPLE 11 :

Des compositions adhésives ayant les formulations F1 à F6 identifiées dans le tableau 1 ci-dessous ont été préparées en mélangeant les solides à sec d'abord. Ensuite l'eau et le Polyfox 156 A ont été ajoutés. Après exposition du mélange obtenu au rayonnement microondes dans un four ménager à 750W pendant 30s, on a ajouté l'émulsion de paraffine. Les quantités de chaque constituant, excepté l'eau, sont données en poids sec.

**Tableau 1**

| Formule | Gélatine (g) | Pectine (g) | Métasilicate de sodium (g) | Acide sébacique (g) | Polyfox 156 A (g) | Emulsion de paraffine (g) | Mélamine (g) | Hémoglobine (g) | Eau (g) |
|---|---|---|---|---|---|---|---|---|---|
| F1 | 27,52 | 6 | 10 | 3,9 | 1,7 | 3,6 | - | - | 75 |
| F2 | 27,52 | 6 | 10 | 3 | 3,5 | 7 | 1,8 | 0,7 | 75 |
| F3 | 27,52 | 6 | 10 | 3 | 3,5 | 3,5 | 1,7 | - | 75 |
| F4 | 27,52 | 6 | 10 | 3 | 3,5 | 9,3 | - | - | 75 |
| F5 | 27,52 | 6 | 10 | 3 | 3,5 | 3 | - | - | 75 |
| F6 | 27,52 | 6 | 10 | 3 | 3,6 | 9 | 1,2 | - | 75 |

Ces compositions adhésives ont été utilisées pour fabriquer des panneaux de particules selon le mode opératoire décrit à l'exemple 8. Les panneaux obtenus montrent d'excellentes performances en termes de module d'élasticité et de résistance à la flexion. Les essais d'élasticité et de flexion ont été effectués selon la norme EN 312-2009. Avec un modulé d'élasticité (M.E.) supérieur à 3000 MPa et une résistance à la flexion d'au moins 18 MPa, les panneaux obtenus avec les compositions adhésives selon l'invention répondent donc aux exigences mécaniques de la norme EN 312-2009 pour des panneaux de catégorie P6 (panneaux les plus performants). Les résultats sont résumés dans le tableau 2 ci-dessous.

**Tableau 2**

| Caractéristique | Panneaux de particules réalisés avec les compositions : | | | | | |
|---|---|---|---|---|---|---|
| | **F1** | **F2** | **F3** | **F4** | **F5** | **F6** |
| M.E. (MPa) | 4372 | 4029 | 3749 | 4481 | 3391 | 4130 |
| R.F. (MPa) | 19,2 | 18,3 | 19,4 | 19,3 | 18,6 | 18,0 |

Proportion de colle par couche par rapport M.S :
Couche Intérieure : 3,23 à 3,72%
Couches Extérieures : 6,08 à 6,62%

### EXEMPLE 12 :

Un mélange sec constitué de 27,62g de gélatine, 6g de pectine, 10g de métasilicate, 3g d'acide sébacique, a été additionné de 60 g d'eau. L'ensemble a été exposé à un rayonnement microondes dans un four ménager à 750W pendant 30 s. On a obtenu un mélange adhésif qui a une viscosité de 7800 mPa.s à température ambiante. Le mélange collant a été étalé, avec une spatule, à raison de 0,02g/cm² sur une surface de 25 × 12,5 mm² d'une éprouvette de hêtre de dimensions : 100 mm × 25 mm × 5 mm qui a ensuite été assemblée avec une autre éprouvette identique. Des essais en traction cisaillement ont été effectués suivant la norme NFT76-107 (iso4687) Avril 2009 avec une machine de traction Shimadzu AGX-10kNX équipée d'une cellule de 10kN.

Les résultats à 48h du module, de la contrainte à la rupture sont comparés dans le tableau 3 à ceux obtenus pour une colle UF testée dans les mêmes conditions.

**Tableau 3**

| **Référence** | **Module (Mpa)** | | **Contrainte (MPa)** | | **Déformation (%)** | |
|---|---|---|---|---|---|---|
| | **Moyenne** | **Ecart type** | **Moyenne** | **Ecart type** | **Moyenne** | **Ecart type** |
| Colle UF du commerce | 106,88 | 11,12 | 9,57 | 1,46 | 16,52 | 2,32 |
| Colle Exemple 12 | 109,73 | 10,38 | 8,22 | 0,6 | 15,59 | 1,18 |

### EXEMPLE 13

On a mélangé à sec 27,52 g de gélatine, 6 g de pectine, 10 g de métasilicate, 3 g d'acide sébacique, 1,7 g de mélamine et 0,05 g d'hémoglobine, on ajoute 75 g d'eau et 3,6 g de Polyfoxl56A.

L'ensemble a été soumis à un rayonnement microonde dans un four ménager à 750W pendant 30s.

Des échantillons de mousse polyuréthane, polystyrène de 50x50 mm ont été découpés puis collés face contre face avec la colle ainsi obtenue.

24 heures plus tard les échantillons ont été collés avec une colle à chaud sur des supports en T, puis soumis à un essai de traction perpendiculaire sur une machine Shimadzu AGX-10kNX.

Les résultats sont résumés dans le tableau 4 ci-dessous.

**Tableau 4**

| **Référence** | **Module (MPa)** | | **Contrainte (MPa)** | | **Déformation (%)** | |
|---|---|---|---|---|---|---|
| | **Moyenne** | **Ecart type** | **Moyenne** | **Ecart type** | **Moyenne** | **Ecart type** |
| Mousse polyuréthane | 1,92 | 0,27 | 0,06 | 0,01 | 3,88 | 0,53 |
| Mousse polystyrène | 4,59 | 0,01 | 0,05 | 0,03 | 4,65 | 4 |

Dans le cas des échantillons de mousse polyuréthane la rupture se fait dans le matériau et non à l'interface du collage.

## Revendications

1. Composition adhésive aqueuse pour la fabrication de panneaux de matières végétales ou l'assemblage de pièces en bois, polystyrène expansé ou mousse de polyuréthane, ladite composition adhésive aqueuse comprenant comme composante adhésive principale un ester de silicate obtenu par réaction entre une protéine, un polysaccharide et un métasilicate alcalin, la protéine comprenant un ou plusieurs de chacun des acides aminés suivants : sérine, thréonine et lysine et le polysaccharide comportant des groupements carboxyliques (-COOH) et/ou des groupements sulfoniques (-SO₃H), **caractérisée en ce que** la protéine est de la gélatine, le polysaccharide est choisi parmi les pectines, les ulvanes, la carraghénane iota et leurs mélanges, la teneur en protéine est de 50 à 70 %, la teneur en polysaccharide est de 5 à 20 % et la teneur en métasilicate alcalin est de 15 à 30 %, ces pourcentages étant exprimés en poids sec par rapport au poids sec de protéine, polysaccharide et métasilicate alcalin.

2. Composition selon la revendication 1, **caractérisée en ce que** le polysaccharide est choisi parmi les pectines.

3. Composition selon la revendication 1, **caractérisée en ce que** le polysaccharide est choisi parmi les broyats ou poudres d'algues.

4. Composition selon l'une quelconque des revendications précédentes, **caractérisée en ce qu'**elle comprend en outre un ou plusieurs adjuvants, notamment choisis parmi les agents fluidifiants, les agents hydrofuges, la mélamine, l'acide sébacique, les tensioactifs, le glyoxal, le triacétate de glycérol et la parraffine.

5. Procédé de préparation d'une composition adhésive comprenant un ester de silicate comme composante adhésive principale selon l'une quelconque des revendications 1 à 4, comprenant au moins les étapes suivantes :
- préparer un mélange à sec d'une protéine, d'au moins un polysaccharide, de métasilicate alcalin et éventuellement d'un ou plusieurs adjuvants, la protéine comprenant un ou plusieurs de chacun des acides aminés suivants : sérine, thréonine et lysine, le polysaccharide comportant des groupements carboxyliques (-COOH) et/ou des groupements sulfoniques (-SO₃H) et tous les constituants du mélange étant sous forme pulvérulente,
- ajouter un solvant aqueux au mélange préparé à l'étape précédente et mélanger,
- soumettre le mélange obtenu à l'étape précédente à un traitement thermique par micro-ondes de façon à obtenir un ester de silicate,
**caractérisé en ce que** la teneur en protéine du mélange à sec est de 50 à 70 %, la teneur en polysaccharide du mélange à sec est de 5 à 20 % et la teneur en métasilicate alcalin du mélange à sec est avantageusement de 15 à 30 %, ces pourcentages étant exprimés en poids sec par rapport au poids sec de protéine, polysaccharide et métasilicate alcalin.

6. Prémix d'une composition adhésive selon l'une quelconque des revendications 1 à 4, constitué d'un mélange à sec d'une protéine, d'au moins un polysaccharide, de métasilicate alcalin et éventuellement d'un ou plusieurs adjuvants, la protéine comprenant un ou plusieurs de chacun des acides aminés suivants : sérine, thréonine et lysine et le polysaccharide comportant des groupements carboxyliques (-COOH) et/ou des groupements sulfoniques (-SO₃H).

7. Utilisation d'une composition adhésive selon l'une quelconque des revendications 1 à 4 pour la fabrication de panneaux de matières végétales.

8. Utilisation selon la revendication 7, **caractérisée en ce que** les panneaux de matières végétales sont des panneaux de particules, des panneaux de fibres, des panneaux de lamelles ou des panneaux contreplaqués.

9. Procédé de fabrication de panneaux de matières végétales, comprenant une étape de traitement desdites matières végétales par une composition adhésive selon l'une quelconque des revendications 1 à 4, et des étapes de mise en forme et de pressage à chaud, des matières végétales ainsi traitées.

10. Utilisation d'une composition adhésive selon l'une quelconque des revendications 1 à 4 comme colle d'assemblage de pièces en bois, polystyrène expansé ou mousse de polyuréthane.

## Patentansprüche

1. Wässrige Klebezusammensetzung zur Fertigung von Platten aus pflanzlichen Stoffen oder zum Zusammenfügen von Teilen aus Holz, expandiertem Polystyrol oder Polyurethanschaum, wobei die wässrige Klebezusammensetzung als Hauptklebebestandteil einen Silikatester umfasst, der durch Reaktion zwischen einem Protein, einem Polysaccharid und einem Alkalimetallsilikat erhalten wird, wobei das Protein eine oder mehrere jeder der folgenden Aminosäuren umfasst: Serin, Threonin und Lysin, und wobei das Polysaccharid Carboxylgruppen (-COOH-Gruppen) und/oder Sulfongruppen (-SOSH-Gruppen) umfasst, **dadurch gekennzeichnet, dass** das Protein Gelatine ist, das Polysaccharid aus den Pektinen, Ulvanen, Jota-Carrageenan und ihren Mischungen ausgewählt ist, wobei der Gehalt an Protein 50 bis 70 % beträgt, der Gehalt an Polysaccharid 5 bis 20 % beträgt, und der Gehalt an Alkalimetallsilikat 15 bis 30 % beträgt, wobei diese Prozentsätze in Trockengewichtsprozent in Bezug auf das Trockengewicht von Protein, Polysaccharid und Alkalimetallsilikat ausgedrückt sind.

2. Zusammensetzung nach Anspruch 1, **dadurch gekennzeichnet, dass** das Polysaccharid aus den Pektinen ausgewählt ist.

3. Zusammensetzung nach Anspruch 1, **dadurch gekennzeichnet, dass** das Polysaccharid aus den zerkleinerten oder pulverförmigen Algen ausgewählt ist.

4. Zusammensetzung nach einem der vorstehenden Ansprüche, **dadurch gekennzeichnet, dass** sie außerdem einen oder mehrere Zusatzstoffe umfasst, die insbesondere aus den Verflüssigern, den wasserabstoßenden Mitteln, Melamin, Sebacinsäure, Tensiden, Glyoxal, Glycerintriacetat und Paraffin ausgewählt sind.

5. Verfahren zur Zubereitung einer Klebezusammensetzung, die einen Silikatester als Hauptklebebestandteil nach einem der Ansprüche 1 bis 4 umfasst, das mindestens die folgenden Schritte umfasst:
Zubereiten einer Trockenmischung aus einem Protein, mindestens einem Polysaccharid, Alkalimetallsilikat und eventuell einem oder mehreren Zusatzstoffen, wobei das Protein eine oder mehrere jeder der folgenden Aminosäuren umfasst: Serin, Threonin und Lysin, wobei das Polysaccharid Carboxylgruppen (-COOH-Gruppen) und/oder Sulfongruppen (-SO3H-Gruppen) umfasst und alle Bestandteile der Mischung pulverförmig sind,
Zugeben eines wässrigen Lösemittels zu der Mischung, die bei dem vorhergehenden Schritt zubereitet wurde,
und Mischen, Unterziehen der bei dem vorhergehenden Schritt erhaltenen Mischung einer Wärmebehandlung durch Mikrowellen derart, dass ein Silikatester erhalten wird,
**dadurch gekennzeichnet, dass** der Gehalt an Protein der Trockenmischung 50 bis 70 % beträgt, der Gehalt an Polysaccharid der Trockenmischung 5 bis 20 % beträgt, und der Gehalt an Alkalimetallsilikat der Trockenmischung vorteilhafterweise 15 bis 30 % beträgt, wobei diese Prozentsätze in Trockengewicht in Bezug auf das Trockengewicht an Protein, Polysaccharid und Alkalimetallsilikat ausgedrückt sind.

6. Vormischung einer Klebezusammensetzung nach einem der Ansprüche 1 bis 4, die aus einer Trockenmischung aus einem Protein, mindestens einem Polysaccharid, Alkalimetallsilikat und eventuell einem oder mehreren Zusatzstoffen besteht, wobei das Protein eine oder mehrere jeder der folgenden Aminosäuren umfasst: Serin, Threonin und Lysin, und wobei das Polysaccharid Carboxylgruppen (-COOH-Gruppen) und/oder Sulfongruppen (-SOSH-Gruppen) umfasst.

7. Verwendung einer Klebezusammensetzung nach einem der Ansprüche 1 bis 4 zur Fertigung von Platten aus pflanzlichen Stoffen.

8. Verwendung nach Anspruch 7, **dadurch gekennzeichnet, dass** die Platten aus pflanzlichen Stoffen Spanplatten, Faserplatten, Lamellenplatten oder Sperrholzplatten sind.

9. Verfahren zur Fertigung von Platten aus pflanzlichen Stoffen, das einen Behandlungsschritt der pflanzlichen Stoffe mit einer Klebezusammensetzung nach einem der Ansprüche 1 bis 4 sowie Formgebungs- und Heißpressschritte der derart behandelten pflanzlichen Stoffe umfasst.

10. Verwendung einer Klebezusammensetzung nach einem der Ansprüche 1 bis 4 als Klebstoff zum Zusammenfügen von Teilen aus Holz, expandiertem Polystyrol oder Polyurethanschaum.

## Claims

1. An aqueous adhesive composition for the manufacture of boards of plant materials or the assembly of parts made of wood, expanded polystyrene or polyurethane foam, said aqueous adhesive composition comprising as a main adhesive component a silicate ester obtained by reaction between a protein, a polysaccharide and an alkaline metasilicate, the protein comprising one or more of each of the following amino acids: serine, threonine and lysine and the polysaccharide including groups carboxylic groups (-COOH) and/or sulphonic groups (-SO₃H), **characterised in that** the protein is gelatine, the polysaccharide is selected from pectins, ulvans, iota carrageenan and mixtures thereof, the protein content is from 50 to 70%, the polysaccharide content is from 5 to 20% and the alkaline metasilicate content is from 15 to 30%, these percentages being expressed in dry weight with respect to the dry weight of the protein, polysaccharide and alkaline metasilicate.

2. The composition according to claim 1, **characterised in that** the polysaccharide is selected from pectins.

3. The composition according to claim 1, **characterised in that** the polysaccharide is selected from algae crushings or powders.

4. The composition according to any one of the preceding claims, **characterised in that** it further comprises one or more adjuvants, selected in particular from fluidifying agents, water-repellent agents, melamine, sebacic acid, surfactants, glyoxal, glycerol triacetate and paraffin.

5. A method for preparing an adhesive composition comprising a silicate ester as a main adhesive component according to any one of claims 1 to 4, comprising at least the following steps:
- prepare a dry mixture of a protein, of at least one polysaccharide, of an alkaline metasilicate and possibly of one or more adjuvants, the protein comprising one or more of each of the following amino acids: serine, threonine and lysine, the polysaccharide including carboxylic groups (-COOH) and/or sulphonic groups (-SO₃H) and all of the constituents of the mixture being in a pulverulent form,
- add an aqueous solvent to the mixture prepared at the previous step and mix,
- subject the mixture obtained in the previous step to a microwave heat treatment so as to obtain a silicate ester,
**characterised in that** the protein content of the dry mixture is from 50 to 70%, the polysaccharide content of the dry mixture is from 5 to 20% and the alkaline metasilicate content of the dry mixture is advantageously from 15 to 30%, these percentages being expressed in dry weight with respect to the dry weight of the protein, polysaccharide and alkaline metasilicate.

6. A premix of an adhesive composition according to any one of claims 1 to 4, consisting of a dry mixture of a protein, of at least one polysaccharide, of an alkaline metasilicate and possibly of one or more adjuvants, the protein comprising one or more of each of the following amino acids: serine, threonine and lysine and the polysaccharide including carboxylic groups (-COOH) and/or sulphonic groups (-SO₃H).

7. A use of an adhesive composition according to any one of claims 1 to 4 for the manufacture of boards of plant materials.

8. The use according to claim 7, **characterised in that** the boards of plant materials are particle boards, fibreboards, slatboards or plywood boards.

9. A method for manufacturing boards of plant materials, comprising a step of treating said plant materials with an adhesive composition according to any one of claims 1 to 4, and steps of shaping and hot-pressing the plant materials thus treated.

10. A use of an adhesive composition according to any one of claims 1 to 4 as a glue for assembling parts made of wood, expanded polystyrene or polyurethane foam.
